# EUROPÄISCHE PATENTSCHRIFT

(11) **EP 3 283 806 B1**
(45) Veröffentlichungstag und Bekanntmachung des Hinweises auf die Patenterteilung: **24.07.2019**
(21) Anmeldenummer: 16724273.4
(22) Anmeldetag: 13.04.2016
(51) Int. Cl.: F16L 55/165, B29C 35/10

(54) **VERBUNDSCHLAUCH ZUR REPARATUR UNDICHTER FLUIDLEITUNGEN, VERFAHREN ZUR HERSTELLUNG EINES DERARTIGEN VERBUNDSCHLAUCHES UND VERFAHREN ZUR REPARATUR UNDICHTER FLUIDLEITUNGEN MIT EINEM VERBUNDSCHLAUCH**
COMPOSITE TUBE FOR REPAIRING LEAKY FLUID LINES, METHOD FOR PRODUCING SUCH A COMPOSITE TUBE AND METHOD FOR REPAIRING LEAKY FLUID LINES WITH A COMPOSITE TUBE
TUYAU FLEXIBLE COMPOSITE SERVANT À RÉPARER DES CONDUITES DE FLUIDE NON ÉTANCHES, PROCÉDÉ SERVANT À FABRIQUER UN TUYAU FLEXIBLE COMPOSITE DE CE TYPE ET PROCÉDÉ SERVANT À RÉPARER DES CONDUITES DE FLUIDE NON ÉTANCHES AVEC UN TUYAU FLEXIBLE COMPOSITE

(30) Priorität: 14.04.2015 DE 102015105668
(43) Veröffentlichungstag der Anmeldung: 21.02.2018
(73) Patentinhaber: Cuylits Holding GmbH, 49593 Bersenbrück (DE)
(72) Erfinder: BENÖLKEN, Ansgar, 27793 Wildeshausen (DE)
(74) Vertreter: Dr. Binder & Binder GbR
(86) Internationale Anmeldenummer: PCT/DE2016/100175
(87) Internationale Veröffentlichungsnummer: WO 2016/165693

(56) Entgegenhaltungen:
- EP-A1- 2 573 442
- EP-A2- 0 875 713
- WO-A1-00/25057
- WO-A1-2014/088053
- DE-A1- 4 238 982
- DE-A1- 19 852 690
- DE-A1-102009 038 628
- DE-A1-102010 023 764
- DE-A1-102012 110 265
- DE-A1-102014 104 884
- DE-U1-202012 104 166

## Beschreibung

Die Erfindung betrifft einen Verbundschlauch zur Reparatur undichter Fluidleitungen, ein Verfahren zur Herstellung eines derartigen Verbundschlauches und ein Verfahren zur Reparatur undichter Fluidleitungen mit einem derartigen Verbundschlauch.

Unter dem Oberbegriff "Fluide" sind ganz allgemein Gase und Flüssigkeiten zu verstehen, die in hierfür geeigneten Fluidleitungen transportiert werden. Hierzu zählen beispielsweise auch Freispiegel- beziehungsweise Gravitationsleitungen. Zur Vermeidung von Infiltrationen oder Exfiltrationen durch Unterspülungen sowie zur Vermeidung von Fluidverlusten oder Unfällen, wie sie beispielsweise durch defekte Gasleitungen entstehen können, ist es von herausragender Bedeutung, dass derartige Fluidleitungen über einen langen Zeitraum hinweg hundertprozentig dicht sind. Da Fluidleitungen jedoch zumindest teilweise im Erdreich verlegt werden, sind diese insbesondere durch den sich im Laufe der Zeit einstellenden Erdversatz einem erhöhten Verschleiß ausgesetzt, was zur Folge hat, dass trotz aller Vorsichtsmaßnahmen Schäden und Undichtigkeiten an den Fluidleitungen entstehen können. Eine Neuverlegung ist immer sehr aufwändig und in Abhängigkeit von den Umgebungsbedingungen sogar teilweise ganz unmöglich. Aus diesem Grund wurden in der jüngeren Vergangenheit verschiedene Verfahren entwickelt, wie beschädigte Fluidleitungen repariert werden können.

So offenbart die EP 0 875 713 B1 ein Auskleidungsmaterial, das bei der Sanierung einer Fluidleitung zum Einsatz kommt und aus einem nahtlosen Plüsch-Textilstoff sowie einem koaxial und frei beweglich darum herum angeordneten Folienschlauch besteht. Der vorzugsweise durch ein Rundstrickverfahren nahtlos hergestellte Rundstrickplüsch stellt eine Maschenware dar, die vor der Einbringung des Auskleidungsmaterials in die Fluidleitung mit einem durch Einfluss von UV-Licht aushärtenden Imprägnierstoff in Form einer Harzzusammensetzung getränkt wird. Das Auskleidungsmaterial wird nach dem Tränken des Plüsch-Textilstoffes mit einem Überdruck in die Fluidleitung eingeblasen und legt sich aufgrund des anstehenden Druckes an der Innenwand der zu sanierenden Fluidleitung an. Die Aushärtung des Imprägnierstoffes erfolgt nach dem Offenbarungsgehalt dieser Schrift mit Hilfe einer UV-Bestrahlung, wozu abschließend eine UV-Lichtquelle durch die mit dem Auskleidungsmaterial ausgefüllte Fluidleitung geführt wird. Der Plüsch-Textilstoff kann aus unterschiedlichen Materialien bestehen. Als Beispiele werden in der EP 0 875 713 B1 Polyester, Aramid, Polyamid, Kevlar, Polyurethan oder Glasfasern beziehungsweise Mischungen aus den genannten Werkstoffen erwähnt. Als nachteilig hat sich bei dieser Lösung jedoch herausgestellt, dass die Herstellung des Plüsch-Textilstoffes relativ aufwändig ist und zudem bei der Verlegung des Auskleidungsmaterials häufig eine Faltenbildung zu verzeichnen ist, die auf die frei bewegliche Aufnahme des Plüsch-Textilstoffes in dem Folienschlauch zurückgeführt werden kann. Die Faltenbildung verstärkt sich insbesondere im Bereich von Krümmungen und Kurven der zu sanierenden Fluidleitung, so dass dadurch insgesamt kein befriedigendes Ergebnis erreicht wird.

Aus der DE 10 2010 023 764 A1 geht darüber hinaus ganz allgemein eine Mehrschichtfolie hervor, wie sie zur Sanierung von unterirdischen Fluidleitungen zum Einsatz kommt. Dabei wird ein Trägermaterial verwendet, das von mehreren Schichten umgeben ist. Das Trägermaterial wird nach dem Offenbarungsgehalt dieser Schrift mit einem reaktiven Kunststoffharz getränkt und ist mit einer innen- und mit einer außen liegenden Schlauchfolie versehen. Das Kunststoffharz kann auch hierbei mit Hilfe einer UV-Strahlung ausgehärtet werden, wobei angemerkt werden muss, dass der Aufbau dieser Mehrschichtfolie sehr komplex ist, so dass das vorgestellte Verfahren zur Reparatur einer Fluidleitung verhältnismäßig kostenintensiv zu sein scheint.

Eine ähnliche Lösung mit ähnlichen Nachteilen geht auch aus der DE 10 2012 110 265 A1 hervor. Hier wird ein Material zur Fluidleitungsbeschichtung im Rahmen einer Sanierung defekter Abwasserkanäle beschrieben, bei dem ein Beschichtungsmaterial Verwendung findet, das eine Textilschicht aufweist, die mit einem aushärtbaren Harz getränkt ist. Es sind ferner eine Außenfolie und eine Innenfolie vorhanden, wobei die Innenfolie nach erfolgter Anbringung des Beschichtungsmaterials wieder entfernt wird. Als UV-Schutz ist zusätzlich eine außen liegende Schutzfolie, ein so genannter "Preliner", vorgesehen, welcher vor Einziehen des Beschichtungsmaterials in die Fluidleitung eingebracht wird. Nachdem sich das Beschichtungsmaterial in der Fluidleitung befindet, wird dieses von innen beispielsweise mit Wasserdampf, beaufschlagt, so dass sich das Beschichtungsmaterial an die Innenwand der Fluidleitung anlegt. Die Aushärtung des Harzes erfolgt abschließend mit UV-Licht oder mit einem Wärmeeintrag.

Schließlich ist aus der DE 198 52 690 A1 ein Schlauchverbund zur Verwendung bei einer Reparatur von Abwasserkanälen bekannt, bei dem ein Schlauch unter Verwendung von Druckluft in einen anderen Schlauch invertiert wird. Der damit geschaffene Schlauchverbund weist ferner eine innere, mit Harz getränkte Schicht sowie eine außen- und eine innen liegende, undurchlässige Schicht in Form einer Folie auf. Die Aushärtung des Harzes erfolgt durch ein aufgeheiztes Druckmedium, also unter dem Einfluss von Wärme, wie es bereits bei dem zuvor beschriebenen Dokument der Fall war. Auch diese Lösung erfordert einen erheblichen Herstellungs- und Energieaufwand und ist damit kostenintensiv.

Die EP 2 573 442 A1 offenbart einen imprägnierten Faserschlauch zur Innenauskleidung von Kanälen und Rohrleitungen, der folgendes aufweist: a. eine Außenschicht, b. eine harzgetränkte Faserschlauchschicht, c. eine Verankerungsschicht, und d. eine innenliegende Polymerschicht mit mindestens einer Barrierelage, und wobei die innenliegende Polymerschicht mindestens eine Längsnaht aufweist.

Den heute üblichen Reparaturverfahren für Fluidleitungen ist jeweils gemein, dass das Schlauchmaterial erst vor Ort, also auf der Baustelle, mit dem aushärtbaren Harz getränkt wird, was zu einer relativ langen Verarbeitungszeit (Topfzeit) führt, wobei bis zur Aushärtung des Harzes teilweise bis zu 2 Stunden oder mehr vergehen können. Ein derartiger Zustand ist natürlich nicht hinnehmbar. Zudem ist festzustellen, dass viele der heute üblichen Reparaturverfahren nur für Fluidleitungen relativ großer Durchmesser geeignet sind. Im Bereich kleinerer Fluidleitungsdurchmesser, also beispielsweise bei Fluidleitungen mit einem Durchmesser zwischen 80 mm und 200 mm, sind diese Verfahren gar nicht oder nur sehr begrenzt einsetzbar.

Der Erfindung liegt die Aufgabe zugrunde, einen Verbundschlauch zur Reparatur undichter Fluidleitungen bereitzustellen, der einen einfachen Aufbau aufweist, möglichst faltenfrei und innerhalb einer kurzen Verarbeitungszeit in Fluidleitungen unterschiedlicher, insbesondere kleinerer Durchmesser verlegt werden kann. Darüber hinaus ist ein Verfahren zur Herstellung eines derartigen Verbundschlauches sowie ein Verfahren zur Reparatur undichter Fluidleitungen mit einem derartigen Verbundschlauch anzugeben.

Die Erfindung löst diese Aufgabenstellung mit den Merkmalen der unabhängigen Patentansprüche 1, 11 und 12.

Weitere Ausgestaltungen der Erfindung sind Gegenstand der sich anschließenden Unteransprüche.

Ein Verbundschlauch zur Reparatur undichter Fluidleitungen, bestehend aus einem durch ein Strickverfahren hergestellten, schlauchförmigen Glasfasertextil und einer dieses Glasfasertextil vollständig und dichtend umschließenden Folie, wurde erfindungsgemäß dahingehend weitergebildet, dass die Folie auf ihrer der Oberfläche des Glasfasertextils zugewandten Innenseite eine durch eine thermische Behandlung partiell aufschmelzbare Schmelzkleberbeschichtung aufweist, über die die Folie mit dem Glasfasertextil nur partiell stoffschlüssig verbunden ist.

Mit der Erfindung wird eine partiell stoffschlüssige Verbindung zwischen der Folie und dem Glasfasertextil hergestellt, was zu einer einfachen Ausführung und einer verbesserten, erstmals faltenfreien Verlegung des Verbundschlauches führt. Das Glasfasertextil kann sowohl verstärkt, als auch unverstärkt verwendet werden, wobei das Glasfasertextil zur Bildung des Verbundschlauches außen mit der Folie "kaschiert" ist. Das Glasfasertextil weist dabei eine multiaxiale Dehnbarkeit auf und ist zudem umformbar sowie ausformbar, was hinsichtlich seiner Verarbeitungseigenschaften für den erfindungsgemäßen Zweck von entscheidendem Vorteil ist.

Das Glasfasertextil nach der Erfindung zeigt demnach vorzugsweise im Gegensatz zu anderen Flächengebilden ein asymmetrisches Dehnungsverhalten welches dadurch gekennzeichnet ist, dass in Längsrichtung (axial) Längenänderungen von mehr als 100% bei hoher Krafteinleitung und in Querrichtung (radial) Längenänderungen von mehr als 150% bei niedriger Krafteinleitung eingestellt werden können. Ebenso ist der erfindungsgemäße Verbundschlauch in der Lage, überschüssiges Material, beispielsweise durch einen Kanalbogen verursacht, zu kompensieren und zu komprimieren ohne dass signifikant erkennbare Falten oder Materialaufwerfungen erkennbar sind.

Ein bevorzugtes erfindungsgemäßes Merkmal des beschriebenen Glasfasertextils ist zudem die konstante Materialdicke im Roh- wie auch im bestimmungsgemäßen Verwendungsfall. In der Regel geht mit einer Längenänderungen, das heißt, mit einer Dehnung, eine Verringerung der Materialdicke einher, welche zu Dünnstellen und damit Schwachstellen führen kann. Das erfindungsgemäße Auskleidungsmaterial erreicht durch die gewählten Konstruktionsparameter eine gleich bleibende Materialstärke. Dies ist für den Anwender von besonderer Bedeutung, da in vielen Fällen Vorgabewerte nicht unterschritten werden dürfen.

Die für die Umsetzung der Erfindung vorteilhafte Elastizität des Verbundschlauches wird insbesondere dadurch erreicht, dass das Glasfasertextil durch ein Strickverfahren hergestellt ist, wobei bevorzugt das so genannte "Interlock-Verfahren" zum Einsatz kommt. Unter dem Begriff: "Interlock" ist eine bestimmte Strickart zu verstehen. Die Fasern werden dabei nicht über Kreuz gewoben, sondern miteinander verschlungen. Hierbei werden die Fasern an zwei Nadelreihen gestrickt. Die Nadelreihen arbeiten einander gegenüberliegend, im Wechsel (Rechts-Rechts-Technik). Sowohl die Ober- als auch die Unterseite werden dabei stets gleichseitig und rechts gestrickt. Dadurch ergibt sich eine Maschenbindung, die auch als "rechts-rechts-gekreuzt" bezeichnet wird. Diese Art kann als Kombination zweier Rechts-Rechts-Bindungen verstanden werden. Das Grundbindungselement ist dabei die Masche. Durch eine geeignete Auswahl von Material- und Prozessparametern lassen sich die zur Erzielung der erfindungsgemäßen Wirkung erforderlichen Eigenschaften erreichen. Hinsichtlich der Folie ist anzumerken, dass diese gemäß der Erfindung bevorzugt eine flexible Barrierefolie ist, was bedeutet, dass die Folie eine Sperrschicht besitzt. Wenn im Zusammenhang mit der Erfindung von einem "Glasfasertextil" die Rede ist, so wird dieses naturgemäß bevorzugt. Es können jedoch ebenso Verbundwerkstoffe mit Glasfasern oder andere Faserwerkstoffe zum Einsatz kommen, die für den erfindungsgemäßen Zweck verwendbar sind. Besonders bevorzugt werden dabei korrosionsbeständige E-CR-Glasfasern. Die zur Herstellung bevorzugt verwendeten Fasermaterialien besitzen eine Feinheit von 200 - 2400 tex, bevorzugt 400 - 1000 tex, und können in Form eines Roving, Garns oder Zwirns vorliegen. Bei der Herstellung des Textilschlauches mittels der genannten Fasermaterialien ist bevorzugt eine Maschenanzahl von 20 - 100 Maschen je 10 cm innerhalb einer Maschenreihe des Gestricks zu erreichen. Eine erste Ausgestaltung der Erfindung ist darin zu sehen, dass das Glasfasertextil ein nahtloser und bevorzugt endloser Schlauch ist, der beispielsweise durch ein Rundstrickverfahren hergestellt und bedarfsgerecht zugeschnitten wird. Das Rundstrickverfahren hat sich für ein derartiges Glasfasertextil als sehr vorteilhaft erwiesen, da es einen geringen Fertigungsaufwand erfordert und zudem die für die Umsetzbarkeit der Erfindung erforderliche Elastizität des Verbundschlauches mit sich bringt.

Versuche haben ferner ergeben, dass die Schmelzkleberbeschichtung der unverarbeiteten Folie in vorteilhafter Weise eine optimale Verbindung zwischen dem Glasfasertextil und der Folie ermöglicht, wenn die Folie einseitig eine Vielzahl auf der Folie vorhandener, sphäroider oder rautenförmiger Erhebungen aufweist. Dabei hat sich gezeigt, dass die partielle, stoffschlüssige Verbindung, die bevorzugt nur in den Bereichen der sphäroiden oder rautenförmigen Erhebungen zwischen dem Glasfasertextil und der Folie erfolgt, eine geringe Relativbewegung zwischen Folie und Glasfasertextil gestattet, obwohl beide Elemente eigentlich stoffschlüssig miteinander verbunden sind. Dieser Umstand ermöglicht insbesondere die eingangs bereits erwähnte, faltenfreie Verlegung des Verbundschlauches innerhalb der zu reparierenden Fluidleitung.

Die Schmelzkleberbeschichtung der Folie, das heißt, die Aufbringung der Erhebungen auf einer Seite der Folie, wird in vorteilhafter Weise mittels einer Gravurwalzenbeschichtung umgesetzt. Dieses Verfahren erlaubt eine qualitativ hochwertige Herstellung der für die Weiterverarbeitung zu einem Verbundschlauch geeigneten Folie.

Ein weiterführender Vorschlag der Erfindung geht dahin, dass das Glasfasertextil durch ein thermisch beaufschlagtes Walzverfahren in einem Temperaturbereich zwischen 70° C und 90° C stoffschlüssig mit der Schmelzkleberbeschichtung verbunden wird. Bei diesem Verfahren wird zeitgleich die Folie in eine dem Glasfasertextil angepasste Schlauchform überführt und mit dem Glasfasertextil verbunden. In dem genannten Temperaturbereich erfolgt eine Aufschmelzung der Erhebungen der Schmelzkleberbeschichtung und dadurch die Herstellung der partiell stoffschlüssigen Verbindung zwischen Glasfasertextil und Folie. Die Folie wird dabei "kaschiert", was beispielsweise mittels eines Ultraschall-Schweißverfahrens erfolgen kann. Das Ultraschall-Schweißverfahren ist innerhalb kurzer Zeit umsetzbar. Hieraus ergibt sich ein ganz wesentlicher, fertigungstechnischer Vorteil dieser erfindungsgemäßen Lösung.

Da die Folie aus einem ursprünglich flächigen Material besteht, muss sie zur Verbindung mit dem schlauchförmigen Glasfasertextil um dieses herum gelegt werden. Durch diese Maßnahme entsteht eine zu schließende Verbindungsnaht, so dass die um das Glasfasertextil herum angeordnete Folie bevorzugt einen Überlappungsbereich aufweist, bei dem ein Abschnitt der Innenoberfläche der Folie auf einem korrespondierenden Abschnitt der Außenoberfläche der Folie aufliegt. Entsprechend einem weiteren Vorschlag nach der Erfindung weist mindestens einer dieser Oberflächenabschnitte der Folie in dem dadurch gebildeten Überlappungsbereich der Oberflächen einen thermoplastischen Klebefilm zur Herstellung eines stoffschlüssigen Verschlusses der Folie auf. Dieser thermoplastische Klebefilm, der bevorzugt auf der Basis von Copolyamiden und modifizierten Polyolefinen hergestellt ist, lässt sich problemlos und unter Bildung einer Abdichtung verarbeiten. Für die Ausbildung einer Abdichtung im Überlappungsbereich ist die beschriebene stoffschlüssige Verbindung darüber hinaus in besonderer Weise geeignet.

Neben einer einschichtigen Ausführung des Klebefilms ist gemäß einer Ausgestaltung der Erfindung ein thermoplastischer Klebefilm in mehreren Schichten beispielsweise dann sinnvoll, wenn an die Festigkeit oder Abdichtung des Überlappungsbereiches besondere Anforderungen gestellt werden.

Der thermoplastische Klebefilm weist dabei bevorzugt einen Schmelzbereich oberhalb 115°C auf, was sich hinsichtlich seiner Verarbeitbarkeit äußerst positiv auswirkt. So kann ein derartiger Klebefilm ab diesem Temperaturbereich auf einfache Weise zum Beispiel durch ein Ultraschall- und/oder Wärmeimpuls-Siegelverfahren aufgeschmolzen werden, so dass dadurch der Überlappungsbereich unter Bildung einer Abdichtung geschlossen wird.

Das erfindungsgemäße Verfahren zur Herstellung eines zur Reparatur undichter Fluidleitungen geeigneten Verbundschlauches ist durch die Verfahrensschritte nach Anspruch 11 gekennzeichnet.

Das vorgestellte Verfahren ermöglicht die Herstellung eines Verbundschlauches mit wenigen Schritten und ist damit fertigungstechnisch bestechend einfach. Der Verbundschlauch besteht nur aus einer Folie und dem Glasfasertextil und stellt damit seinerseits einen problemlos zu verarbeitenden Gegenstand dar. Er kann als Meterware zur Verfügung gestellt werden und wird in dieser Form bevorzugt vorkonfektioniert bereitgestellt. Auf diese Weise ist der gesamte Verbundschlauch sehr einfach zu transportieren und bedarfsgerecht weiter zu verarbeiten.

Ein weiteres erfindungsgemäßes Verfahren zur Reparatur undichter Fluidleitungen mit einem Verbundschlauch nach der Erfindung ist durch folgende Verfahrensschritte gekennzeichnet:
- Herstellung einer Öffnung der Fluidleitung und Ortung beziehungsweise Sichtung der in der Fluidleitung vorhandenen Schäden,
- Bereitstellung einer für die Reparatur erforderlichen Länge eines Verbundschlauches, bestehend aus einem Glasfasertextil und einer stoffschlüssig mit diesem verbundenen und das Glasfasertextil umschließenden, lichtdurchlässigen Folie, wobei das Glasfasertextil zunächst mit einem styrolfreien, ungesättigten, durch eine UV-Lichtbestrahlung aushärtbaren Polyesterharz getränkt wird,
- Fixierung eines offenen Endes des Verbundschlauches an einer Inversiervorrichtung,
- Herstellung einer abgedichteten Verbindung zwischen der Öffnung der Fluidleitung und dem Verbundschlauch,
- Einziehen des Verbundschlauches in die Fluidleitung oder Beaufschlagung des Verbundschlauches mit einem in der Inversiervorrichtung erzeugten Überdruck und dadurch bewirktes Einblasen des Verbundschlauches in die zu reparierende Fluidleitung, wobei sich der Verbundschlauch infolge des gegebenen Druckes unmittelbar an die Innenoberfläche der Fluidleitung anlegt,
- mindestens einmalig Erzeugung einer UV-Lichtbestrahlung über die gesamte Länge des Verbundschlauches mittels eines wenigstens einmal durch den Verbundschlauch geführten UV-Strahlers, sodass das Polyesterharz aushärtet.

Im Hinblick auf das Inversions- oder Einzugsverfahren ist es bevorzugt, dass das in Harz getränkte Glasfasermaterial mit möglichst geringem Luftdruck eingebracht werden kann, um beispielsweise Energie zu sparen. Gleichzeitig muss es dem Anwender möglich sein, den Verbundschlauch kontrolliert und formschlüssig in die zu sanierende Fluidleitung einzubringen. Der erfindungsgemäße Verbundschlauch erlaubt dem Anwender die Verwendung eines Luftdrucks von 250 - 500 mbar. Höhere Luftdrücke sind nicht notwendig, können aber bis zu 1200 mbar realisiert werden. Ein bevorzugtes erfindungsgemäßes Merkmal des Verbundschlauches ist zudem die exakt definierte Grenze zwischen elastischer und plastischer Verformung. Diese Grenze liegt bevorzugt in einem Bereich von 300 - 450 mbar.

Ein anstelle der bislang verwendeten Zweikomponenten-Epoxidharze hierbei zum Einsatz kommendes, styrolfreies Polyesterharz hat den entscheidenden Vorteil, dass dieses eine sehr kurze Aushärtetzeit aufweist. Bislang erforderten die verwendeten Epoxidharze nämlich Zeiten von 2 Stunden oder mehr, während derer eine Fortsetzung der Tätigkeiten an der Baustelle nicht mehr möglich war. Angesichts der zu verwendenden Reaktionsharze sind für den Verbundschlauch thermoplastische Materialien wie Polyamid, Polyolefine und Polyester sowie Fluorpolymere bevorzugt.

Darüber hinaus fallen bei den hier zum Einsatz kommenden Polyesterharzen aufwändige Mischungen vor Ort, das heißt auf der Baustelle, weg, was ebenfalls einen wesentlichen Beitrag zur Verkürzung der Bearbeitungszeiten leistet. Der erfindungsgemäße Verbundschlauch kann zum Beispiel bereits vorab mit dem Polyesterharz getränkt und in dieser vorkonfektionierten Ausführung direkt zur Baustelle geliefert werden. Der Einsatz eines UV-Strahlers hat gegenüber den bislang überwiegend verwendeten Härtungsverfahren erhebliche wirtschaftliche und Energie sparende Vorteile. Eine besondere Energieeinsparung ergibt sich zum Beispiel daraus, dass als UV-Strahler eine LED-Lampe verwendet wird, die ein UV-Licht des benötigten Spektrums ausstrahlt. Derartige LED-Lampen verbrauchen extrem wenig Energie und sind dennoch in ihrer Strahlungsintensität hochwirksam und damit sehr effizient.

In an sich bekannter Weise wird vor dem Beginn der Reparatur einer Fluidleitung zunächst eine Befahrung der Fluidleitung mit einer Kamera durchgeführt, die exakt die vorhandenen Schäden dokumentiert. Heutzutage sind derartige Kamerabefahrungen beispielsweise mittels miniaturisierter Roboter möglich. Während der optischen Überprüfung der Fluidleitung wird sinnvoller Weise gleichzeitig eine Lokalisierung der vorhandenen Schäden innerhalb der Fluidleitung durchgeführt. Hierzu erfolgt eine Vermessung der zu reparierenden Teile der Fluidleitung, die ebenfalls während der Befahrung der Fluidleitung erfolgt. Die erfassten Werte können in einer zentralen Verarbeitungseinheit oder einfacher gesagt in einem Computer gespeichert, gegebenenfalls optisch dargestellt und für die weitere Bearbeitung der Fluidleitung sinnvoll ausgewertet werden.

Die zuvor bereits erwähnte Vorkonfektionierung des Verbundschlauches lässt sich in erheblichem Maße verbessern, wenn der Verbundschlauch als Meterware, auf einer Trommel aufgewickelt zur Verfügung gestellt wird. Durch das Aufwickeln auf einer Trommel kann der Verbundschlauch sehr einfach transportiert und für die Einbringung in die Fluidleitung von der Trommel abwickelt werden. Mit dieser Maßnahme wird folglich auch eine weitgehende Automatisierung der Reparatur der Fluidleitung möglich.

Während des Einblasens des Verbundschlauches in die Fluidleitung wird dieser umgekrempelt, so dass sich die ursprünglich durch das Glasfasertextil gebildete Innenseite des Verbundschlauches an die Fluidleitungsinnenwand anlegt und die Folie die Innenseite der reparierten Fluidleitung bildet.

Eine alternative Methode hierzu besteht darin, den Verbundschlauch in die Fluidleitung einzuziehen. Die hierfür erforderlichen Maßnahmen sind dem Fachmann bekannt. Diese Art der Einbringung des Verbundschlauches in die Fluidleitung ist jedoch weniger schonend für die Oberfläche des Verbundschlauches, als die bevorzugte Variante des Einblasens.

Ein besonderer Vorteil ergibt sich hinsichtlich der Verbesserung des Stülpverhaltens des Verbundschlauches, wenn der Verbundschlauch vor seiner Einbringung in die Fluidleitung etwa auf eine Temperatur zwischen 20°C und 40°C, vorzugsweise 30°C, vorgewärmt wird. Die Erwärmung des Verbundschlauches innerhalb der Trommel kann beispielsweise mittels einer elektrischen Erhitzung der den Verbundschlauch aufnehmenden Trommel erfolgen.

Wenn in diesem Zusammenhang von einer Vorkonfektionierung des als Meterware auf einer Trommel aufgewickelten Verbundschlauches gesprochen wird, so ist darunter zu verstehen, dass der Verbundschlauch bereits vor dem Aufwickeln auf die Trommel und damit vor der Anlieferung an die Baustelle mit dem Polyesterharz getränkt wurde. Da das Polyesterharz nach der Erfindung UVlichtempfindlich ist, müssen Maßnahmen getroffen werden, den vorkonfektionierten Verbundschlauch innerhalb der Trommel vor UV-Licht zu schützen. Im einfachsten Fall kann eine derartige Maßnahme in einer vor Licht geschützten Kapselung der Trommel bestehen. Eine andere Variante ist darin zu sehen, dass der Schlauch insgesamt in einem Verpackungsschlauch aufgenommen ist, der vor der Verarbeitung des Verbundschlauches entfernt wird.

Je nach Zustand der Umgebung beziehungsweise der zu reparierenden Fluidleitung kann es vorkommen, dass innerhalb der Fluidleitung starke Rostschäden oder Ausblühungen vorhanden oder beispielsweise Wurzelenden in die Fluidleitung eingedrungen sind. Vor der Reparatur einer auf diese Weise beanspruchten Fluidleitung ist es daher sinnvoll, derartige Rostbestandteile oder Ausstülpungen zu entfernen und/oder die zu reparierende Fluidleitung vor Beginn der Sanierung mit einer Schutzfolie (Preliner) auszukleiden.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
Figur 1: beispielhaft einen Querschnitt durch einen Verbundschlauch,
Figur 2: einen Längsschnitt durch einen Teil der zu reparierenden Fluidleitung und durch einen Teil einer Inversiervorrichtung und
Figur 3: einen Schnitt durch eine reparierte Fluidleitung während einer UV-Licht-Bestrahlung.

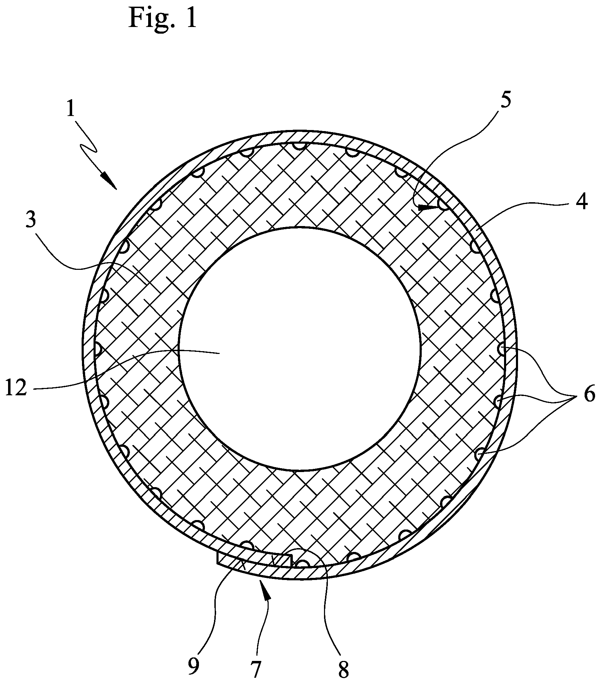

Der in der Figur 1 dargestellte Querschnitt durch einen Verbundschlauch 1 zeigt in anschaulicher Weise dessen grundlegenden Aufbau. Der Verbundschlauch 1 besteht aus einem Glasfasertextil 3, das in einer dieses vollständig aufnehmenden Folie 4 eingeschlossen ist. Das Glasfasertextil 3 besteht vorliegend aus einem durch ein Rundstrickverfahren hergestellten Schlauch. Die Folie 4 weist bei dem dargestellten Beispiel auf ihrer dem Glasfasertextil 3 zugewandten Innenseite eine Vielzahl einzelner Erhebungen 6 auf, die einseitig mittels einer Gravurwalzenbeschichtung auf die Folie 4 aufgebracht wurden, bevor die Folie 4 um das Glasfasertextil 3 herum gelegt wurde. Diese Erhebungen 6 weisen eine sphäroide, also kugelförmige Geometrie auf und bilden insgesamt eine Schmelzkleberbeschichtung 5 der Folie 4. Zur Herstellung einer partiell gegebenen, stoffschlüssigen Verbindung zwischen der Folie 4 und dem Glasfasertextil 3 kommt ein thermisch beaufschlagtes Walzverfahren in einem Temperaturbereich zwischen 70° C und 90° C zum Einsatz, bei dem die Schmelzkleberbeschichtung 5 aufgeschmolzen wird und sich dadurch stoffschlüssig mit dem Glasfasertextil 3 verbindet. Durch diese einzigartige Form der Verbindung besteht nur partiell eine stoffschlüssige Verbindung zwischen Folie 4 und Glasfasertextil 3, die die besondere Flexibilität eines dadurch hergestellten Verbundschlauches 1 bildet. In dem in Figur 1 gezeigten Beispiel weist der Verbundschlauch 1 ferner einen Überlappungsbereich 7 auf. Der Überlappungsbereich 7 wird durch einen Abschnitt 8 der Innenoberfläche der Folie 4 gebildet, der auf einem korrespondierenden Abschnitt 9 der Außenoberfläche der Folie 4 zur Anlage kommt, wenn die Folie 4 vollständig um das Glasfasertextil 3 herum gewickelt ist. In diesem Überlappungsbereich 7 werden die aufeinander liegenden Abschnitte 8, 9 der Folie 4 ebenfalls mittels einer stoffschlüssigen Verbindung verbunden, wozu im vorliegenden Beispiel ein thermoplastischer Klebefilm mit einem Schmelzbereich oberhalb von 115°C zum Einsatz kommt, der durch ein Ultraschall-Siegelverfahren aufgeschmolzen wird und dadurch die stoffschlüssige Verbindung herstellt. Durch diese Verbindung wird gleichzeitig eine Abdichtung im Überlappungsbereich 7 erreicht. Der Verbindungsschlauch 1 weist zudem einen Innenhohlraum 12 auf, der jedoch nicht dem Durchlassquerschnitt der Fluidleitung 2 entspricht, da beim Einbringen des Verbundschlauches 1 in die Fluidleitung 2 der Verbundschlauch 1 umgekrempelt wird.

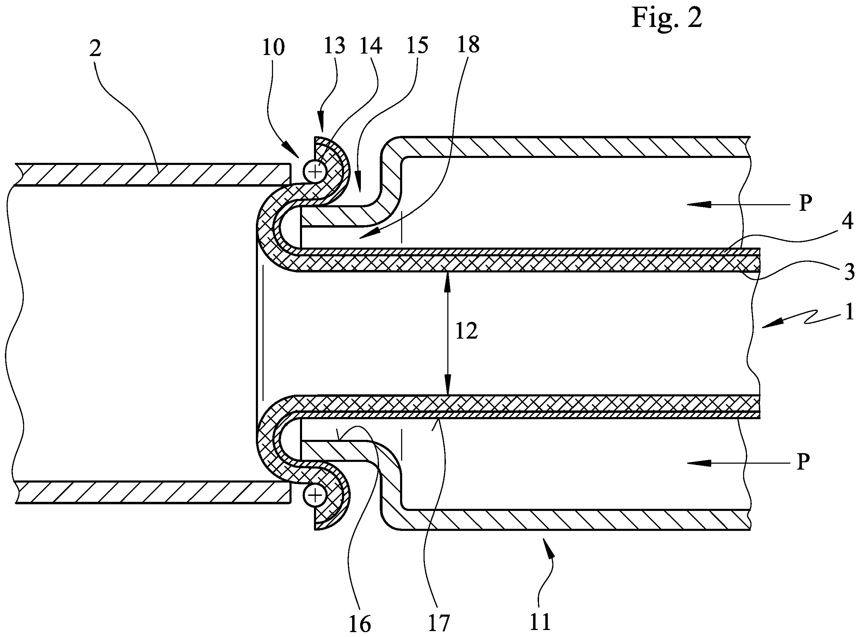

Anhand der Schnittdarstellung der Figur 2 lässt sich das Verfahren zur Reparatur einer Fluidleitung 2 anschaulich beschreiben. Zur Durchführung des Reparaturverfahrens der Fluidleitung 2 wird diese vor einer Befahrung mit einer Kamera und einer Vermessung der zu reparierenden Stellen mit einer Öffnung 10 versehen, durch die später auch der Verbundschlauch 1 in die Fluidleitung 2 eingebracht werden kann. Zur Einbringung des Verbundschlauches 1 in die Fluidleitung 2 wird ein offenes Ende des Verbundschlauches 1 an einer Inversiervorrichtung 11 angesetzt, so dass dieser in dem genannten Abschnitt einen Stülpbereich 13 bildet. Die Inversiervorrichtung 11 weist zum Ansetzen des Stülpbereiches 13 des Verbundschlauches 1 einen Flanschabschnitt 15 auf. Zur Fixierung des Stülpbereiches 13 an dem Flanschabschnitt 15 der Inversiervorrichtung 11 wurde bei dem in Figur 2 dargestellten Beispiel ein Spannmittel 14 verwendet, bei dem es sich vorliegend um eine einfache Spannschelle handelt. Innerhalb der Inversiervorrichtung 11 ist bei dieser Art der Befestigung des Verbundschlauches 1 ein Spaltabstand 18 zwischen der Innenoberfläche 16 des Flanschabschnittes 15 und der Außenoberfläche 17 des Verbundschlauches 1 gegeben, der von Nutzen ist, um einen Druck p über die Inversiervorrichtung 11 in das verspannte Ende des Verbundschlauches 1 einzubringen. Dies führt dazu, dass der Verbundschlauch 1 in die Fluidleitung 2 eingeblasen werden kann. Dabei wird der angelegte Druck p solange aufrecht erhalten, bis das vorab in das Glasfasertextil 3 eingebrachte Polyesterharz durch eine Bestrahlung mit UV-Licht vollständig ausgehärtet ist.

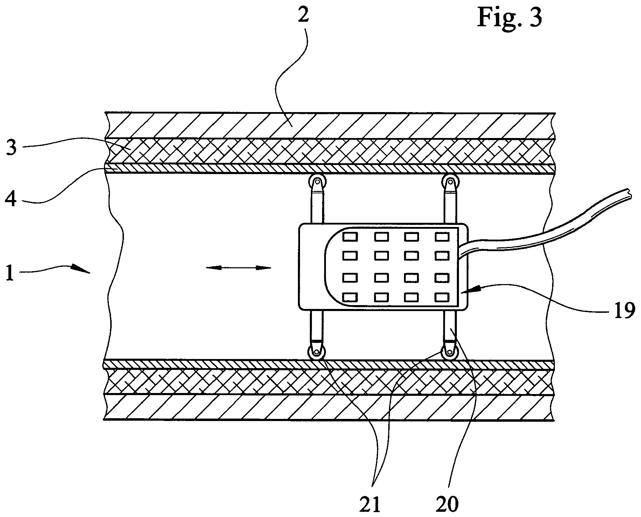

Der Vorgang der Aushärtung des Polyesterharzes im Glasfasertextil 3 ist in der Figur 3 gezeigt. Aus dieser Darstellung kann entnommen werden, dass der durch den aufgebrachten Druck p umgekrempelte Verbundschlauch 1 nunmehr mit seinem Glasfasertextil 3 an der Innenoberfläche der Fluidleitung 2 anliegt, während die Folie 4 die Innenoberfläche der reparierten Fluidleitung 2 bildet. In diesem Zustand wird zunächst der über die Inversiervorrichtung 11 aufgebrachte Druck p aufrecht erhalten, so dass eine unmittelbare, faltenfreie Anlage des Verbundschlauches 1 an der gesamten Innenwand der Fluidleitung 2 erhalten bleibt. Da das zum Einsatz kommende Polyesterharz durch eine Bestrahlung mit UV-Licht aushärtet, erfolgt eine Bestrahlung mittels eines UV-Strahlers 19, in Form einer mit LED's bestückten UV-Lampe, die durch die Fluidleitung 2 geführt wird. Dabei ist aufgrund der Intensität der zum Einsatz kommenden LED's in der Regel eine einmalige Bestrahlung ausreichend, um das in dem Glasfasertextil 3 vorhandene Polyesterharz vollständig auszuhärten. Der UV-Strahler 19 ist dabei in einem fahrbaren Gestell 20 aufgenommen, dessen Beweglichkeit innerhalb der Fluidleitung 2 durch geeignete Rollkörper 21 gewährleistet wird. Zum Abschluss erfolgt erforderlichenfalls ein Auftrennen vorhandener Abzweigungen der Fluidleitung 2 mit einem Schneidroboter, so dass eine ungehinderte Fluidströmung innerhalb des vorhandenen Strömungsleitungssystems weiterhin gegeben ist. Nachdem auch dieser Vorgang beendet ist, kann die Öffnung 10 der auf diese Weise reparierten Fluidleitung 2 wieder verschlossen werden.

### BEZUGSZEICHENLISTE:

- 1: Verbundschlauch
- 2: Fluidleitung
- 3: Glasfasertextil
- 4: Folie
- 5: Schmelzkleberbeschichtung
- 6: Erhebungen
- 7: Überlappungsbereich
- 8: Abschnitt der Innenoberfläche der Folie
- 9: Abschnitt der Außenoberfläche der Folie
- 10: Öffnung der Fluidleitung
- 11: Inversiervorrichtung
- 12: Innenhohlraum des Verbundschlauches
- 13: Stülpbereich
- 14: Spannmittel
- 15: Flanschabschnitt
- 16: Innenoberfläche des Flanscabschnittes
- 17: Außenoberfläche des Verbundschlauches
- 18: Spaltabstand
- 19: UV-Strahler
- 20: Gestell
- 21: Rollkörper

## Patentansprüche

1. Verbundschlauch (1) zur Reparatur undichter Fluidleitungen (2), bestehend aus einem durch ein Strickverfahren hergestellten Glasfasertextil (3), welches als nahtloser Schlauch ausgebildet ist, und einer dieses Glasfasertextil (3) vollständig und dichtend umschließenden Folie (4), wobei die Folie (4) auf ihrer der Oberfläche des Glasfasertextils (3) zugewandten Innenseite eine durch eine thermische Behandlung partiell aufschmelzbare Schmelzkleberbeschichtung (5) aufweist, über die die Folie (4) mit dem Glasfasertextil (3) nur partiell stoffschlüssig verbunden ist.

2. Verbundschlauch nach Anspruch 1,
**dadurch gekennzeichnet, dass**
der Schlauch durch ein Rundstrickverfahren hergestellt ist.

3. Verbundschlauch nach einem der vorstehend genannten Ansprüche,
**dadurch gekennzeichnet, dass**
das rohe und verarbeitete Glasfasertextil (3) des Verbundschlauches (1) ein asymmetrisches Dehnungsverhalten und eine konstante Materialdicke aufweist.

4. Verbundschlauch nach einem der vorstehend genannten Ansprüche,
**dadurch gekennzeichnet, dass**
die Schmelzkleberbeschichtung (5) der unverarbeiteten Folie (4) aus einer Vielzahl, einseitig auf der Folie (4) vorhandener, sphäroider oder rautenförmiger Erhebungen (6) besteht.

5. Verbundschlauch nach einem der vorstehend genannten Ansprüche,
**dadurch gekennzeichnet, dass**
die Schmelzkleberbeschichtung (5) der Folie (4) mittels einer Gravurwalzenbeschichtung auf die Folie (4) aufgebracht ist.

6. Verbundschlauch nach einem der vorstehend genannten Ansprüche,
**dadurch gekennzeichnet, dass**
das Glasfasertextil (3) durch ein thermisch beaufschlagtes Walzverfahren in einem Temperaturbereich zwischen 70° C und 90° C stoffschlüssig mit der Schmelzkleberbeschichtung (5) verbunden ist.

7. Verbundschlauch nach einem der vorstehend genannten Ansprüche,
**dadurch gekennzeichnet, dass**
die um das Glasfasertextil (3) herum angeordnete Folie (4) einen Überlappungsbereich (7) aufweist, bei dem ein Abschnitt (8) der Innenoberfläche der Folie (4) auf einem korrespondierenden Abschnitt (9) der Außenoberfläche der Folie (4) aufliegt und mindestens einer dieser Oberflächenabschnitte (8, 9) der Folie (4) in dem dadurch gebildeten Überlappungsbereich (7) der Oberflächen einen thermoplastischen Klebefilm zur Herstellung einer stoffschlüssigen Verbindung der Folie (4) aufweist.

8. Verbundschlauch nach Anspruch 7,
**dadurch gekennzeichnet, dass**
der thermoplastische Klebefilm mehrschichtig ist.

9. Verbundschlauch nach Anspruch 7 oder 8,
**dadurch gekennzeichnet, dass**
der thermoplastische Klebefilm einen Schmelzbereich oberhalb 115°C aufweist.

10. Verbundschlauch nach einem der Ansprüche 7 bis 9,
**dadurch gekennzeichnet, dass**
die Folie (4) in dem Überlappungsbereich (7) durch ein Ultraschall- und/oder Wärmeimpuls-Siegelverfahren dichtend verschlossen ist.

11. Verfahren zur Herstellung eines zur Reparatur undichter Fluidleitungen geeigneten Verbundschlauches (1), gemäß einem der vorstehend genannten Ansprüche, mit folgenden Verfahrensschritten:
- Bereitstellung einer zugeschnittenen, zunächst flächigen Folie (4), die einseitig eine Vielzahl, eine partiell aufschmelzbare Schmelzkleberbeschichtung (5) bildender, sphäroider oder rautenförmiger Erhebungen (6) aufweist,
- Auflage eines durch ein Strickverfahren hergestellten, als nahtloser Schlauch ausgebildeten Glasfasertextils (3) auf die mit der Schmelzkleberbeschichtung (5) ausgestattete Seite der Folie (4),
- partiell stoffschlüssige Verbindung der Folie (4) mit dem Glasfasertextil (3) durch ein thermisch beaufschlagtes Walzverfahren in einem Temperaturbereich zwischen 70° C und 90° C, wodurch die Folie (4) an die Schlauchform des Glasfasertextils (3) angepasst wird,
- Herstellung einer stoffschlüssigen Verbindung eines Überlappungsbereiches (7) der Folie (4) mittels eines Ultraschall- und/oder Wärmeimpuls-Siegelverfahrens, wozu der Überlappungsbereich (7) aus einem Abschnitt (8) der Innenoberfläche der Folie (4) besteht, der auf einem korrespondierenden Abschnitt (9) der Außenoberfläche der Folie (4) zur Auflage kommt und mindestens einer dieser Oberflächenabschnitte der Folie (4) in dem Überlappungsbereich (7) der Oberflächen einen thermoplastischen Klebefilm aufweist, dessen Schmelzbereich oberhalb 115° C liegt.

12. Verfahren zur Reparatur undichter Fluidleitungen mit einem Verbundschlauch nach einem der Ansprüche 1-10, hergestellt durch ein Verfahren nach Anspruch 11,
**gekennzeichnet durch** die Verfahrensschritte:
- Herstellung einer Öffnung (10) der Fluidleitung (2) und Ortung beziehungsweise Sichtung der in der Fluidleitung (2) vorhandenen Schäden,
- Bereitstellung einer für die Reparatur erforderlichen Länge eines Verbundschlauches (1), bestehend aus einem schlauchförmigen, Glasfasertextil (3) und einer stoffschlüssig mit diesem verbundenen und das Glasfasertextil (3) umschließenden, lichtdurchlässigen Folie (4), wobei das Glasfasertextil (3) zunächst mit einem styrolfreien, ungesättigten, durch eine UV-Lichtbestrahlung aushärtbaren Polyesterharz getränkt wird,
- Fixierung eines offenen Endes des Verbundschlauches (1) an einer Inversiervorrichtung (11),
- Herstellung einer abgedichteten Verbindung zwischen der Öffnung (10) der Fluidleitung (2) und dem Verbundschlauch (1),
- Einziehen des Verbundschlauches (1) in die Fluidleitung oder Beaufschlagung des Verbundschlauches (1) mit einem in der Inversiervorrichtung (11) erzeugten Überdruck und dadurch bewirktes Einblasen des Verbundschlauches (1) in die zu reparierende Fluidleitung (2), wobei sich der Verbundschlauch (1) infolge des gegebenen Druckes unmittelbar an die Innenoberfläche der Fluidleitung (2) anlegt,
- mindestens einmalig Erzeugung einer UV-Lichtbestrahlung über die gesamte Länge des Verbundschlauches (1) mittels eines wenigstens einmal durch den Verbundschlauch (1) geführten UV-Strahlers (19), sodass das Polyesterharz aushärtet.

13. Verfahren nach Anspruch 12,
**dadurch gekennzeichnet, dass**
die Ortung und Sichtung in der Fluidleitung (2) vorhandener Schäden mittels einer Kamerabefahrung und einer Vermessung erfolgt.

14. Verfahren nach Anspruch 12 oder 13,
**dadurch gekennzeichnet, dass**
der Verbundschlauch (1) als Meterware, auf einer Trommel aufgewickelt zur Verfügung gestellt und durch Einziehen oder Einblasen bei gleichzeitigem Umstülpen des Verbundschlauches (1) in die Fluidleitung (2) eingebracht wird.

15. Verfahren nach einem der Ansprüche 12 bis 14,
**dadurch gekennzeichnet, dass**
beim Einblasen des Verbundschlauches (1) in die Fluidleitung (2) die ursprünglich durch die Folie (4) gebildete Außenseite des Verbundschlauches (1) durch das Umstülpen die Innenseite der reparierten Fluidleitung (2) bildet und sich die ursprünglich durch das Glasfasertextil (3) gebildete Innenseite des Verbundschlauches (1) an die Fluidleitungsinnenwand anlegt.

16. Verfahren nach Anspruch 12 bis 15,
**dadurch gekennzeichnet, dass**
der Verbundschlauch (1) zur Verbesserung des Stülpverhaltens des Verbundschlauches (1) vor dessen Einbringung in die Fluidleitung (2) auf eine Temperatur zwischen 20° C und 40° C vorgewärmt wird.

17. Verfahren nach einem der Ansprüche 12 bis 16,
**dadurch gekennzeichnet, dass**
der als Meterware auf einer Trommel vorkonfektionierte, das heißt, mit dem Polyesterharz getränkte Verbundschlauch (1) vor UV-Licht geschützt ist.

18. Verfahren nach einem der vorstehend genannten Ansprüche 12 bis 17,
**dadurch gekennzeichnet, dass**
die zu reparierende Fluidleitung (2) vor Beginn der Sanierung mit einer Schutzfolie (Preliner) ausgekleidet wird.

## Claims

1. Composite tube (1) for repairing leaky fluid lines (2), consisting of a glass fiber textile (3) produced by a knitting method and formed as a seamless tube, and of a film (4) fully and sealingly surrounding this glass fiber textile (3),
wherein
the film (4), on its inner side facing the surface of the glass fiber textile (3), has a coating of hotmelt adhesive (5) that is partially meltable by a thermal treatment, via which the film (4) is only partially cohesively bonded to the glass fiber textile (3).

2. Composite tube (1) according to Claim 1,
**characterized in that**
the tube is produced by a circular knitting process.

3. Composite tube (1) according to one of the preceding claims,
**characterized in that**
the raw and processed glass fiber textile (3) of the composite tube (1) shows an asymmetrical stretching behavior and a constant material thickness.

4. Composite tube (1) according to one of the preceding claims,
**characterized in that**
the coating of hotmelt adhesive (5) of the unprocessed film (4) is composed of a plurality of spheroidal or rhombic projections (6) on one side of the film (4).

5. Composite tube (1) according to one of the preceding claims,
**characterized in that**
the coating of hotmelt adhesive (5) of the film (4) is applied to the film (4) by means of gravure roller coating.

6. Composite tube (1) according to one of the preceding claims,
**characterized in that**
the glass fiber textile (3) is cohesively bonded to the coating of hotmelt adhesive (5) via a thermally applied rolling process in a temperature range of between 70°C and 90°C.

7. Composite tube (1) according to one of the preceding claims,
**characterized in that**
the film (4) arranged around the glass fiber textile (3) has an overlapping area (7) in which a section (8) of the inner surface of the film (4) lies on a corresponding section (9) of the outer surface of the film (4) and at least one of these surface sections (8, 9) of the film (4) has a thermoplastic adhesive film for the production of cohesive bonding of the film (4) in the overlapping area (7) of the surfaces formed thereby.

8. Composite tube (1) according to Claim 7,
**characterized in that**
the thermoplastic adhesive film has multiple layers.

9. Composite tube (1) according to Claim 7 or 8,
**characterized in that**
the thermoplastic adhesive film has a melting range of more than 115°C.

10. Composite tube (1) according to one of Claims 7 to 9,
**characterized in that**
the film (4) is sealingly closed in the overlapping area (7) via an ultrasound and/or heat impulse sealing process.

11. Method for producing a composite tube (1) suitable for repairing leaky fluid lines according to one of the above-mentioned claims, comprising the following method steps:
- provision of an initially flat film (4) that is cut to size which has a plurality of spheroidal or rhombic projections (6) forming a partially meltable coating of hotmelt adhesive (5) on one side,
- partially meltable application of a glass fiber textile (3) produced by a knitting method and formed as a seamless tube to the side of the film (4) provided with the coating of hotmelt adhesive (5),
- partial cohesive bonding of the film (4) to the glass fiber textile (3) via a thermally applied rolling process in a temperature range of between 70°C and 90°C, by means of which the film (4) is adapted to the tube shape of the glass fiber textile (3),
- production of cohesive bonding of an overlapping area (7) of the film (4) by means of an ultrasound and/or heat impulse sealing process, for which purpose the overlapping area (7) is composed of a section (8) of the inner surface of the film (4) that comes to lie on a corresponding section (9) of the outer surface of the film (4) and at least one of these surface sections of the film (4) in the overlapping area (7) of the surfaces has a thermoplastic adhesive film having a melting range above 115°C.

12. Method for repairing leaky fluid lines with a composite tube (1) according to one of Claims 1-10 produced by a method as claimed in Claim 11, **characterized by** comprising the following method steps:
- making of an opening (10) in the fluid line (2) and localization or identification of the damage present in the fluid line (2),
- provision of a length of a composite tube (1) required for the repair consisting of a tubular glass fiber textile (3) and a transparent film (4) bonded cohesively thereto and enclosing the glass fiber textile (3), wherein the glass fiber textile (3) is first saturated with a styrene-free unsaturated polyester resin that is curable by UV irradiation,
- fixation of an open end of the composite tube (1) to an inversion device (11),
- production of a sealed bond between the opening (10) of the fluid line (2) and the composite tube (1),
- insertion of the composite tube (1) into the fluid line or application of excess pressure produced in the inversion device (11) to the composite tube (1), thus causing the composite tube (1) to be blown into the fluid line (2) to be repaired, wherein as a result of the given pressure, the composite tube (1) lies directly against the inner surface of the fluid line (2), and
- production of UV irradiation at least once over the entire length of the composite tube (1) by means of a UV emitter (19) guided at least once through the composite tube (1) so that the polyester resin is cured.

13. Method according to Claim 12,
**characterized in that**
localization and identification of damage present in the fluid line (2) is carried out by scanning with a camera and measurement.

14. Method according to Claim 12 or 13,
**characterized in that**
the composite tube (1) is provided wound onto a drum as piece goods, and introduced into the fluid line (2) by pulling or blowing in with simultaneous inversion of the composite tube (1).

15. Method according to one of Claims 12 to 14,
**characterized in that**
on blowing of the composite tube (1) into the fluid line (2), the outer side of the composite tube (1) originally formed by the film (4), because of the inversion, forms the inner side of the repaired fluid line (2), and the inner side of the composite tube (1) originally formed by the glass fiber textile (3) lies against the inner wall of the fluid line (2).

16. Method according to Claim 12 to 15,
**characterized in that**
in order to improve the inversion behavior of the composite tube (1), the composite tube (1) is preheated to a temperature between 20°C and 40°C before it is inserted into the fluid line (2).

17. Method according to one of Claims 12 to 16,
**characterized in that**
the composite tube (1) prefabricated, i.e., saturated with the polyester resin, on a drum as piece goods is protected from UV light.

18. Method according to one of the preceding Claims 12 to 17,
**characterized in that**
the fluid line (2) to be repaired is lined with a protective film (preliner) before the beginning of restoration.

## Revendications

1. Tuyau flexible composite (1) servant à réparer des conduites de fluide non étanches (2), se composant d'un textile de fibres de verre (3) fabriqué par un procédé de tricotage, qui est réalisé sous forme de tuyau flexible sans couture, et d'un film (4) entourant entièrement et de façon étanche ce textile de fibres de verre (3), dans lequel le film (4) présente sur son côté intérieur tourné vers la surface du textile de fibres de verre (3) un revêtement de colle fusible (5) pouvant être fondue partiellement par un traitement thermique, par lequel le film (4) n'est que partiellement assemblé matériellement au textile de fibres de verre (3).

2. Tuyau flexible composite (1) selon la revendication 1, **caractérisé en ce que** le tuyau flexible est fabriqué par un procédé de tricotage circulaire.

3. Tuyau flexible composite (1) selon l'une quelconque des revendications précédentes, **caractérisé en ce que** le textile de fibres de verre (3) brut et traité du tuyau flexible composite (1) présente un comportement d'extension asymétrique et une épaisseur de matière constante.

4. Tuyau flexible composite (1) selon l'une quelconque des revendications précédentes, **caractérisé en ce que** le revêtement de colle fusible (5) du film non traité (4) se compose d'une multiplicité de protubérances (6) de forme sphéroïdale ou rhombique, présentes sur un côté du film (4).

5. Tuyau flexible composite (1) selon l'une quelconque des revendications précédentes, **caractérisé en ce que** le revêtement de colle fusible (5) du film (4) est déposé sur le film (4) par un revêtement de cylindre gravé.

6. Tuyau flexible composite (1) selon l'une quelconque des revendications précédentes, **caractérisé en ce que** le textile de fibres de verre (3) est matériellement assemblé au revêtement de colle fusible (5) par un procédé de calandrage à chaud dans un domaine de température compris entre 70°C et 90°C.

7. Tuyau flexible composite (1) selon l'une quelconque des revendications précédentes, **caractérisé en ce que** le film (4) disposé autour du textile de fibres de verre (3) présente une zone de chevauchement (7), dans laquelle une partie (8) de la surface intérieure du film (4) s'applique sur une partie correspondante (9) de la surface extérieure du film (4) et au moins une de ces parties de surface (8, 9) du film (4) présente dans la zone de chevauchement (7) ainsi formée des surfaces un film adhésif thermoplastique pour la réalisation d'un assemblage matériel du film (4).

8. Tuyau flexible composite (1) selon la revendication 7, **caractérisé en ce que** le film adhésif thermoplastique est réalisé en plusieurs couches.

9. Tuyau flexible composite (1) selon une revendication 7 ou 8, **caractérisé en ce que** le film adhésif thermoplastique présente un domaine de fusion se situant au-dessus de 115°C.

10. Tuyau flexible composite (1) selon l'une quelconque des revendications 7 à 9, **caractérisé en ce que** le film (4) est fermé de façon étanche dans la zone de chevauchement (7) par un procédé de soudage par ultrasons et/ou par impulsions thermiques.

11. Procédé de fabrication d'un tuyau flexible composite (1) convenant pour la réparation de conduites de fluide non étanches, selon l'une quelconque des revendications précédentes, présentant les étapes de procédé suivantes:
- préparation d'un film découpé, d'abord plat (4), qui présente sur un côté une multiplicité de protubérances (6) de forme sphéroïdale ou rhombique formant un revêtement de colle fusible (5) pouvant être fondue partiellement,
- dépôt d'un textile de fibres de verre (3) fabriqué par un procédé de tricotage, réalisé sous forme de tuyau flexible sans couture, sur le côté du film (4) muni du revêtement de colle fusible (5),
- assemblage partiellement matériel du film (4) au textile de fibres de verre (3) par un procédé de calandrage à chaud dans un domaine de température compris entre 70°C et 90°C, ce qui adapte le film (4) à la forme de tuyau flexible du textile de fibres de verre (3),
- réalisation d'un assemblage matériel d'une zone de chevauchement (7) du film (4) au moyen d'un procédé de soudage par ultrasons et/ou par impulsions thermiques, pour laquelle la zone de chevauchement (7) se compose d'un partie (8) de la surface intérieure du film (4), qui vient s'appliquer sur une partie correspondante (9) de la surface extérieure du film (4) et au moins une de ces parties de surface du film (4) présente dans la zone de chevauchement (7) des surfaces un film adhésif thermoplastique, dont le domaine de fusion se situe au-dessus de 115°C.

12. Procédé de réparation de conduites de fluide non étanches avec un tuyau flexible composite selon l'une quelconque des revendications 1 à 10, fabriqué par un procédé selon la revendication 11, **caractérisé par** les étapes de procédé suivantes:
- réalisation d'une ouverture (10) dans la conduite de fluide (2) et localisation ou visualisation des dégâts présents dans la conduite de fluide (2),
- préparation d'une longueur, nécessaire pour la réparation, d'un tuyau flexible composite (1) se composant d'un textile de fibres de verre (3) en forme de tuyau flexible et d'un film transparent (4) assemblé matériellement à celui-ci et entourant le textile de fibres de verre (3), dans lequel le textile de fibres de verre (3) est d'abord imprégné avec une résine de polyester sans styrène, non saturée, pouvant être durcie par un rayonnement de lumière UV,
- fixation d'une extrémité ouverte du tuyau flexible composite (1) à un dispositif d'inversion (11),
- réalisation d'un assemblage étanche entre l'ouverture (10) de la conduite de fluide (2) et le tuyau flexible composite (1),
- insertion du tuyau flexible composite (1) dans la conduite de fluide ou exposition du tuyau flexible composite (1) à une surpression produite dans le dispositif d'inversion (11) et soufflage ainsi provoqué du tuyau flexible composite (1) dans la conduite de fluide à réparer (2), dans lequel le tuyau flexible composite (1) s'applique directement sur la surface intérieure de la conduite de fluide (2) en raison de la pression appliquée,
- production au moins une fois d'un rayonnement de lumière UV sur toute la longueur du tuyau flexible composite (1) au moyen d'un émetteur UV (19) conduit au moins une fois à travers le tuyau flexible composite (1), de telle manière que la résine de polyester durcisse.

13. Procédé selon la revendication 12, **caractérisé en ce que** l'on effectue la localisation et la visualisation de dégâts présents dans la conduite de fluide (2) au moyen d'un déplacement de caméra et d'une mesure.

14. Procédé selon une revendication 12 ou 13, **caractérisé en ce que** le tuyau flexible composite (1) est disponible sous forme de marchandise vendue au mètre, enroulée sur un tambour, et on l'introduit dans la conduite de fluide (2) par insertion ou soufflage tout en retournant simultanément le tuyau flexible composite (1).

15. Procédé selon l'une quelconque des revendications 12 à 14, **caractérisé en ce que** lors du soufflage du tuyau flexible composite (1) dans la conduite de fluide (2) le côté extérieur du tuyau flexible composite (1) formé initialement par le film (4) forme du fait du retournement le côté intérieur de la conduite de fluide réparée (2) et le côté intérieur du tuyau flexible composite (1) formé initialement par le textile de fibres de verre (3) s'applique sur la paroi intérieure de la conduite de fluide.

16. Procédé selon l'une quelconque des revendications 12 à 15, **caractérisé en ce que** l'on préchauffe le tuyau flexible composite (1) à une température comprise entre 20°C et 40°C avant son introduction dans la conduite de fluide (2) afin d'améliorer le comportement de retournement du tuyau flexible composite (1).

17. Procédé selon l'une quelconque des revendications 12 à 16, **caractérisé en ce que** le tuyau flexible composite (1) pré-conditionné, c'est-à-dire imprégné avec la résine de polyester, sous forme de marchandise vendue au mètre sur un tambour, est protégé contre la lumière UV.

18. Procédé selon l'une quelconque des revendications précédentes 12 à 17, **caractérisé en ce que** l'on revêt la conduite de fluide à réparer (2) avec un film de protection (preliner) avant le début de l'assainissement.
